# EUROPEAN PATENT SPECIFICATION

(11) **EP 4 463 097 B1**
(45) Date of publication and mention of the grant of the patent: **08.07.2026**
(21) Application number: 23740151.8
(22) Date of filing: 10.01.2023
(51) Int. Cl.: A61C 8/00, A61C 1/08, B23B 51/06

(54) **SIMPLIFIED SYSTEM GUIDED DENTAL IMPLANT SURGERY**
VEREINFACHTES SYSTEM GESTEUERTE ZAHNIMPLANTATCHIRURGIE
SYSTÈME SIMPLIFIÉS POUR CHIRURGIE D'IMPLANT DENTAIRE GUIDÉE

(30) Priority: 11.01.2022 CL 20220072
(43) Date of publication of application: 20.11.2024
(73) Proprietor: Brok SpA, Concepción (CL)
(72) Inventor: JOFRE ARAYA, Jorge, San Pedro de la Paz (CL)
(74) Representative: Vossius & Partner Patentanwälte Rechtsanwälte mbB
(86) International application number: PCT/IB2023/050194
(87) International publication number: WO 2023/135509

(56) References cited:
- WO-A1-2020/080605
- US-A1- 2005 026 114
- US-A1- 2005 118 550
- US-A1- 2007 233 122
- US-A1- 2009 069 834
- US-A1- 2010 009 314
- US-A1- 2014 147 806
- US-A1- 2015 018 844
- US-A1- 2016 287 336
- US-A1- 2017 071 704
- US-A1- 2017 071 704
- US-A1- 2019 321 144
- US-A1- 2021 290 346
- US-A1- 2021 353 384
- US-B1- 6 196 636

## Description

### SCOPE

The present invention relates to systems and equipment used for dental implant surgeries, and more specifically to a simplified system and procedure for computer-guided drilling, which allow inserting dental implants by bone expansion.

### BACKGROUND

Dental implant surgery has become a routine treatment in dentistry. However, the success of this treatment can only be ensured by proper implant placement that allows for an aesthetic result and long-term bone stability (Fuentealba and Jofré 2015; Shen et al. 2015; Hinckfuss et al. 2012). The computer-guided implant surgeries are the best and most advanced tool to achieve this, which are a reverse engineering flowchart, which begins on planning, on a three-dimensional radiographic image of the patient (Cone beam), first establishing the ideal position of the future teeth, for then virtually plan the ideal position of the implants that are anchored to the bone. Then, positioning guides are digitally made, which are manufactured by three-dimensional printing, and through the use of specially designed surgical instruments, implant surgeries can be performed according to virtually plan.

The use of these guides provides numerous advantages, among which, it stands out a better postoperative period due to the fact that surgeries are performed without flap (without lifting the gum), which reduces the intervention time, pain intensity, need of analgesics and recovery time (Sun et al. 2015; Turbush & Turkyilmaz 2012; Sammartino et al. 2004). Undoubtedly, this is an important benefit, since a high incidence of bone perforations is reported when trying to perform flapless surgeries with free-hand techniques, without the use of guides, while the use of guides in the indicated cases reduces the risk and improves procedural safety (Behneke et al. 2012). With this, it is emerging as an alternative for certain patients with general medical commitment who cannot opt for conventional surgery, or in cases of therapy with bisphosphonates, radiation or anticoagulants (Behneke et al. 2012; Van de Wiele et al. 2015; Hultin et al. 2012), as long as they meet the minimum criteria for bone and gum volume. Furthermore, this device allows increasing safety, by maintaining the planned implant position with a certain margin of error (Sun et al. 2015; Sarment et al. 2003).

The final result for the patient, especially aesthetics, is an aspect highly benefited by the use of 3D surgical guides, since the correct location of the implant in the three planes of space is the basis for the future rehabilitation success (Fuentealba and Jofré 2015, Shen et al. 2015; Hinckfuss et al. 2012).

The impact of guided surgery was such that 25% of dentists were expected to adopt this technology by 2012 (Millenium Research Group). However, even though it is still the fastest growing segment of implantology, and there are many guide systems on the market, currently no more than 5% of surgeries are performed with this technology. This is due to numerous causes, which are discussed below.

The used instrument sets for computer-guided surgeries have been extrapolated from other disciplines and are designed to drill materials of composition and nature very different from jawbone. They are instruments or excavation burs, which cannot be used in areas of atrophic or reabsorbed bones, which correspond to over than 50% of patients, and which must undergo previous reconstructive surgeries, which makes the treatments more extensive and traumatic. In addition, they present an intrinsic error, which corresponds to the difference between the internal diameter of the guide cylinder and the respective drilling bur, which results in the lateral deviation of the implant. This can represent 62.6% of the total error (M. Cassetta et al. 2013, Cassetta et al. 2014, Sun et al 2015), constituting an extremely significant factor, estimating that, by itself, it can cause angular deviations of up to 5.15° total. Tahmaseb et al. reported, based on their systematic review, deviations of up to 7.90° in cadaver studies, and up to 8.54° in clinical studies (1560 implants) (Tahmaseb et al. 2014).

While the less tolerance between the cylinder and the respective cutter, there should be greater precision, but instead there is a greater friction between the components, which reduces the tactile sensitivity of the operator. This characteristic is essential for executing different drilling protocols for bones of different densities, as it ensures implant stability when the bone is very soft and facilitates insertion when it is very dense.

Added to all of the above, there is the obstruction of the operative field visibility and the difficulty of the surgical bed irrigation at the time of drilling, which translates into the increase in temperature recorded by Misir et al., compared to the free hand classical technique of surgical bed preparation, confirming the hypothesis that the guide cylinders would prevent the irrigation arrival to the bone (Misir et al. 2009). This requires additional external irrigation with refrigerated serum, which makes the procedure more complex.

Additionally, current conventional protocol prepared 3D surgical guides have a fairly significant production cost in relation to the total cost of the implant (Chiarelli et al. 2012; Farley et al. 2013; Papaspyridakos et al. 2012; Meloni et al. 2013).

The currently used procedure is complex, it requires many stages and instruments, showing over than 36.4% complications (Tahmaseb et. Al 2014), thus it is not recommended to be carried out by beginners, but experienced surgeons and in cases providing a good anatomical safety margin. 3D guides have been shown to require experience from the surgeon and a learning curve that provides greater reliability (Van de Wiele et al. 2015). In complex cases, with poor bone availability for implant insertion and, therefore, a higher risk of error margin, novice surgeons are more likely to generate poor implant position, depth, or inclination (Shen et al. 2015). The most experienced surgeons are not encouraged to invest time and money in a technology designed only for low complexity cases, with adequate bone volumes, leaving no possibility of using this technology in patients with deficient bones, which are the most complex procedures, corresponding to over than 50% of the people requesting implant treatments.

There are companies, institutions and private clinics developing prototypes of anatomical models, which they call "surgical guides". These offer digital manufacturing services with desktop 3D printers; however, they must use the instrument sets for guided surgery available in the market, thus they do not solve the basic problem found in the instruments, which due to the large number of components makes its application difficult, with a high failure rate. Its drills are designed for drilling and removing material, excavating, which renders necessary to use them only when the bone volume is large, to provide a safety margin for the preparation of the implant bed.

### STATE OF THE ART

Current guides use an instrument set containing drills and guide cylinders totaling more than 50 components on average (US8777612). Thus, during the surgical phase, interchangeable cylinders are used adapting to the different drill diameters, until the implant site preparation is completed (Sun et al. 2015; Cassetta et al. 2014).

The latest versions of these instruments have attempt to reduce the number of guide cylinders, leaving only one wider cylinder, and it is the cutters that adapt to this cylinder, increasing its diameter in its non-active part, thou this makes harder for visibility, irrigation, handling and the reduction in components is not significant.

The improvements in the surgical instruments used to drill the bone have been aimed at improving its cutting capacity (WO 2018 2026 05A1) or low speed bone drilling (WO 2017174648 A1; AU 2019200021 A1), though this design is more user-friendly with the bone, it cannot be used in computer-guided surgeries, since a cylindrical profile is required to serve as a guide and rotation at high speed. Nor can it be used in areas of deficient or resorbed bone, which correspond to over than 50% of patients.

In conventional implant surgery, new concepts of bone preparation have appeared, called osteocondensation, which uses blunt burs turning in the reverse direction, so that there is not a cutting effect but a lateral compaction that expands the bone, which is elastic in nature (US 9737312 B2). The design of these burs is similar to the conventional one and does not allow to be guided by computer.

Documents US2017071704A1 and US2021290346A1 show a drill guide system with a set of tools combining cutting and bone compacting functions.

US2005026114A1 shows a kit with a pilot drill and a series of bone expanders having a threaded tip.

US2005118550A1 shows an osseous compression tool, with a polygonal cross section, for use in dentistry for the preparation of an osseous seat.

US2009069834A1 shows a drill guide with a reamer and a series of bone compacting tools, some with a pointed tip.

### BRIEF DESCRIPTION OF THE INVENTION

To remedy the shortcomings of the prior art, a drilling system is provided to be used with a computer-made guide element having an opening therein, wherein said opening defines a drilling position and a drilling direction allowing dental implant surgery to be performed. The system comprises
a drilling means, which comprises a drilling body with a pointed end attached to a smooth-walled cylindrical body; and
one or more expansion means of the perforation, each comprising a guide body with its pointed end that maintains the position determined by the drilling means, and a second body with non-cutting lateral faces and a cylindrical-conical shape whose diameter increases as it moves away from the pointed end, allowing the insertion of an implant whose shape corresponds to a last expansion element but with a larger diameter;
wherein the second body of the expansion means comprises a plurality of lateral faces, which in a cross-sectional view have a regular polygon shape and wherein the smooth-walled cylindrical body precisely fits the opening in the (previously computer made) guide element.

In this way, by means of the system configuration that is described, it is possible to avoid the deviation problems in the drilling that occur in the prior art, since the drilling means comprises a cylindrical body that precisely fits an opening in a previously computer manufactured guide element, thus allowing defining a drilling position and a drilling direction, while at the same time maintaining the position determined in the planning during the system operation.

Furthermore, due to the fact that the drilling means comprises a drilling body with a pointed end, rotating this piece facilitates its introduction into the cortex of atrophic bones, making a first expansion of these. This allows for the drilling and expansion of the bone simultaneously while maintaining a virtually determined position.

Preferably, the one or more expansion means of the perforation have incremental diameters and the guide body with a pointed end allows to maintain the position determined by the drilling means, avoiding the need for additional elements to ensure the position and direction during operation, and improving visibility and irrigation. Thus, the use of expansion means with incremental diameters makes it possible for maintaining the initial position and expand the bone until obtaining beds with a sufficient diameter for the subsequent insertion of an implant.

The description further contemplates a drilling procedure, which is not part of the claimed invention, to perform computer-guided dental implant surgery, comprising the steps of:
fabricating a guide element comprising an opening providing a drilling position and direction, wherein the opening is spatially oriented according to a planned direction in a computational radiographic image;
inserting through the opening an expansion drilling means, which comprises a drilling body with a pointed end attached to a smooth-walled cylindrical body that matches the opening size; and
withdrawing the guide element and sequentially introducing one or more expansion means of the perforation into the formed perforation, comprising a guide body at its end to maintain its position and direction and a frustoconical body allowing the expansion of the perforation.

In this way, in the described procedure, the guide element is removed after the application of the drilling means, subsequently, having the professional in charge a direct vision and irrigation, a first means of expansion of the perforation is introduced into the initial osteotomy, whose tip or end adapts to the initial preparation, maintaining its position, since it has a similar geometry to the first but with a larger diameter. The preparation continues with one or more expansion means having an equivalent geometry but with incremental diameters allowing the trajectory to be maintained, expanding the bone tissue to the diameter required for the insertion of the implant. This allows to maintain the determined direction virtually but with the benefits of an unguided free-hand surgery, such as the visualization of the surgical field, irrigation, management of the osteotomy according to bone density, control of the primary stability of the implant. In addition, the geometry of the drilling and expansion means, with sharp points and non-cutting lateral faces, allows the bone tissue walls to be preserved and expanded, extending its indication for areas of deficient or atrophic bone, which currently must previously undergo reconstructive surgeries.

In view of the above, the disclosed system and procedure allow it use in more complex cases, where there is limited bone and gum volume, which corresponds to over than 50% of the people consulting for implants and who with the technologies of the prior art is not possible to perform this type of procedure.

On the other hand, the disclosed proposal also considerably reduces the number of components, since it preferably requires the use of two expansion means giving a total of four elements in the system. This clearly contrasts with conventional prior art instruments for guided surgery, considerably lowering costs, which are much higher than the free-hand technique (Kühl et al. 2013).

Being much simpler, it would allow beginner dentists to have a direct view of the operative field, and to change the bone preparation sequence, according to its sensation of hardness, facilitating implant stability, without losing the benefit of a guided surgery and thus simplifying the dental implant insertion procedure.

### BRIEF DESCRIPTION OF THE FIGURES

Figure 1a and 1b show a schematic representation of a drilling means and its parts.
Figure 2 shows a schematic representation of an expansion means and the detail of a cross section thereof.
Figure 3 shows a representation of a sequence of steps for the application of the implant fixation procedure with computer-guided bone expansion, using the system of the present invention.
Figure 4 shows a schematic representation of an implant and its parts.
Figure 5 shows a schematic representation of an alternative configuration of an expansion means and a sectional view thereof.
Figures 6a and 6b show a representation of bone loss using a conventional prior art system and using the present invention.

### DETAILED DESCRIPTION OF THE INVENTION

According to the configurations shown in the accompanying figures, the present invention consists of a simplified computer-guided drilling system for performing dental implant surgery, comprising:
an expansion drilling means (1), which comprises a drilling body with a pointed end (1b) attached to a smooth-walled cylindrical body (1a); and
one or more expansion means (2) of the perforation, comprising a guide body with its pointed end (2a) that maintains the drilling position, and a second body with a cylindrical-conical shape (2b) whose diameter increases as it moves further away from the end, allowing the insertion of an implant (4) whose shape corresponds to the last expansion element but with a larger diameter;
wherein the smooth-walled cylindrical body (1a) precisely fits an opening (3c) in a previously computer made guide element (3b), wherein said opening defines a drilling position and a drilling direction.

Preferably, the drilling means (1) and the one or more expansion means (2) of the perforation are inserted sequentially, and have a progressively larger diameter allowing the size of the perforation to be increased. Furthermore, the pointed end drilling body (1b) corresponds to the pointed end of the guide body (2a) of a first expansion means of the perforation, thus allowing the position determined by the drilling means to be maintained.

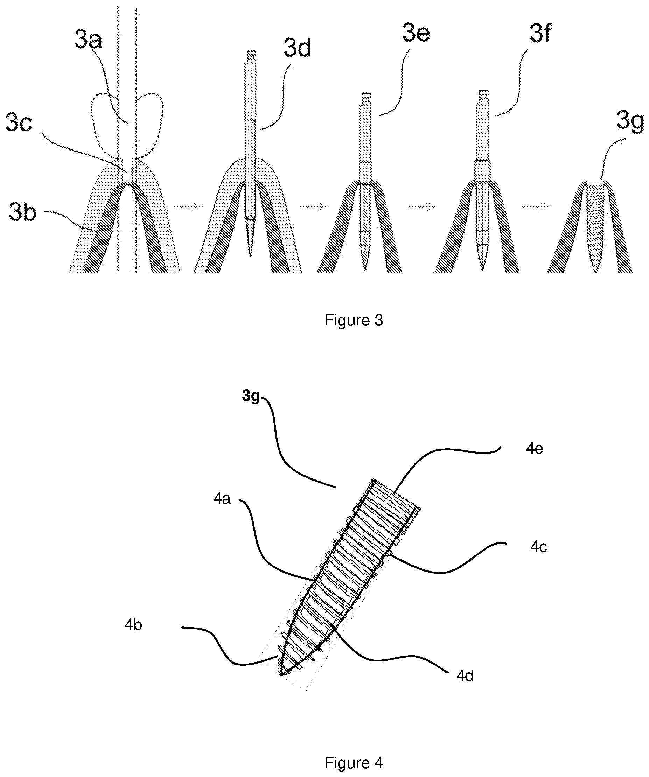

In this way, the expansion drilling means (1) is precisely adjusted to the opening (3c) which operates as a pre-fabricated computer guide for maintaining the position determined in the planning, as shown more clearly in the Figure 3. Said drilling means (1) comprises at its end a second body in the shape of a pyramid with a sharp point (1b) that when rotating, preferably connected to a dental motor, facilitates its introduction into the cortex of atrophic bones, making a first expansion thereof. These instruments can be connected to a dental motor rotating at revolutions ranging from 400 to 2000 RPM, allowing the drilling and expansion of the bone simultaneously and maintaining a predetermined position virtually.

In preferred configurations of the invention, the smooth-walled cylindrical body (1a) of the drilling means (1) has a diameter that is in a range between 1 to 4 millimeters, and more preferably 2 mm, and has a length that is in a range between 5 to 20 millimeters, and more preferably the length is 10 mm.

The drilling body (1b) of the drilling means comprises a sharp pointed pyramid shape. Preferably, the pointed pyramid of the drilling body has between 3 to 8 lateral faces, and more preferably it has 4 lateral faces.

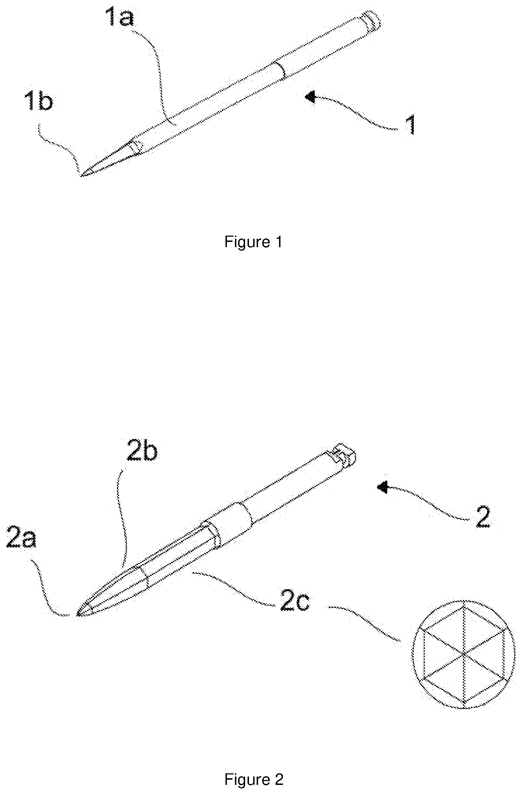

According to figure 2, the drilling system comprises a sequence of expansion means of incremental diameters, constituted by a guide body with a pointed end (2a) that allows maintaining the position determined by the drilling means (1). These bodies with pointed ends (2a) are connected to a second body with a cylindrical-conical shape (2b) that progressively increases its diameter towards the rear of the device, thus allowing the perforation to expand. In addition, the diameter of said means increases progressively between the different expansion means (2), in such a way that the body base of each one of them corresponds to the guide body of the end or tip of the next one, always maintaining the drilling position.

In the invention, the second body (2b) of the expansion means (2) comprises a plurality of lateral faces, which in a cross-sectional view have a regular polygon shape (2c). The regular polygon shape can correspond to different shapes, such as quadrangular, hexagonal, octagonal, or others. Preferably, the regular polygon has between 3 to 8 faces and more, preferably it has 6 faces.

Preferably, the expansion means (2) are at least three, wherein a first means in its widest part has a diameter between 2.4 to 2.8 mm, and more preferably 2.6. The second expansion means has at its widest part a diameter between 2.9 to 3.5 mm, and more preferably 3.2, and the third expansion means has a diameter between 3.6 to 4.1 mm at its widest part of, and more preferably 3.8.

According to Figure 3, an exemplary surgical procedure begins with a planning on a three-dimensional radiographic image of the patient (Cone beam). This planning allows by means of reverse engineering to visualize the final restoration and to project the ideal position that the implant should have (3a), and print the guide element (3b) that contains the opening (3c) meant to maintain the direction of the drilling means (3d) during the drilling process, according to the previously planned direction.

When the drilling process has finished, the drilling means (3d) is removed and, with direct vision and irrigation, the first expansion means (3e) is introduced into the initial osteotomy, whose tip or end thereof adapts to the initial drilling, maintaining its position. This is because the first expansion means (3e) has a similar geometry to the drilling means (3d), but with a larger diameter. In this way, only the first drilling means (3d) requires a guide element (3b) and the following expansion means (3e, 3f) maintain the position, without requiring said guide element (3b).

Figure 4 shows a detailed view of the implant (3g) shown in figure 3. In this configuration, the implant (3g) comprises a conical cylinder-shaped body (4a), with a sharp point (4b) corresponding to the shape of the expansion elements (3e, 3f).

Preferably, the implant (3g) has a double spiral thread shape, which allows the bone expansion to be terminated and gives it stability. In this configuration, the thread preferably reduces its width and increases its depth towards the pointed end, as represented by numerals 4c and 4d. Furthermore, at its upper end thereof, it comprises a prosthetic connection (4e) for coupling with a rehabilitation pillar (not shown in the figures).

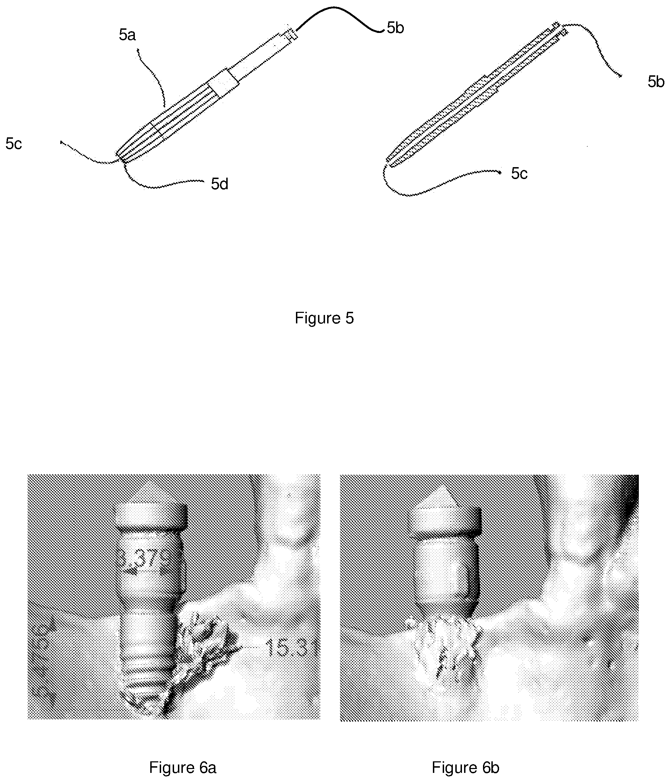

Figure 5 shows a front view and a sectional view of an alternative configuration of an expansion means (5a), wherein said expansion means (5a) comprises an axial perforation in the central area thereof, allowing the passage of a coolant flow. Said perforation passes through the expansion means through its two ends (5b, 5c), and allows irrigation in order to separate the membrane from the maxillary sinus and prevent its rupture. At the lower end thereof, this perforation ends in a serrated area adopting a crown shape with rounded corners (5d).

Figures 6a and 6b allow contrasting bone loss when using a conventional prior art system and the system of the present invention. More particularly, Figure 6a shows the effects on bone loss using a conventional prior art system, while Figure 6b shows the effects of using the system of the present invention.

A drilling procedure to perform a computer-guided dental implant surgery, using the system of the invention, comprises comprising the steps of:
fabricating a guide element (3b) comprising an opening (3c) providing a drilling position and direction, wherein the opening is spatially oriented according to a planned direction in a computational radiographic image;
inserting through the opening (3c) a means for generating a perforation, which comprises a drilling body with a pointed end (1b) attached to a smooth-walled cylindrical body (1a) that adjusts to the size of the opening; and
removing the guide element and introducing sequentially into the formed perforation one or more expansion means of the perforation, comprising a guide body at its end (2a) thereof for maintaining its position and direction and a frustoconical body (2b) allowing expanding the perforation.

Preferably, the procedure comprises the additional step of sequentially introducing the one or more expansion means of the perforation, which have a progressively larger diameter, until reaching the size required for inserting an implant.

### APPLICATION EXAMPLES

The effectiveness of this new product was compared with that of a conventional guided surgery set, on an artificial bone model, taken from a real patient scan, which was replicated 20 times. The implant position was planned virtually and guides were constructed by three-dimensional impression. Using one of the most recognized guided surgery systems available on the market, 10 implants were inserted in 10 models. In the remaining 10 models, 10 implants were inserted using the system of the present invention. To determine the precision of both systems, the models with the implants inside were digitized and compared with virtual planning. The results showed that there were no significant differences between the mean angular deviation between the two comparison groups (T-Test, p = 0.28).

Additionally, bone loss around the implants was measured with both systems. As shown in figure 6, conventional drills removed twice as much bone (figure 6a) compared to the system of the present invention (figure 6b), leaving an area of 7.67 ± 4.74 mm² exposed, versus 3.43 ± 4.32 mm² of the new system.

The conventional guide system left an exposed surface of the implants, which on average was statistically significant when compared with the system of the present invention (T-Test, p = 0.015).

The present invention has been clinically evaluated by inserting, based on virtual planning, a total of 171 implants in 63 patients with severe atrophies, which under regular conditions would require prior reconstruction with grafts. In 95.4% of the cases reconstructions with bone grafts were avoided, with a simple, safe and minimally invasive surgery, which is evidenced by the great acceptance shown by the operators and patients after the intervention, as shown in Table 1.

In this sample, 3 complications (1,7%) associated with mucosal lesions caused by the prostheses were recorded. No surgical complications.

**Table 1:**

| **No. of Implants** | **Cases** | **Total** | **Flap** | **Position** | **Grafts** | **Complications** |
|---|---|---|---|---|---|---|
| 1 | 27 | 27 | Correcta | 0 | 0 | 0 |
| 2 | 10 | 20 | Correcta | 0 | 0 | 0 |
| 3 | 5 | 15 | Correcta | 0 | 0 | 0 |
| 4 | 7 | 28 | Correcta | 2 | 2 | 0 |
| 5 | 5 | 25 | Correcta | 2 | 2 | 0 |
| 6 | 8 | 48 | Correcta | 4 | 4 | 3 |
| 8 | 1 | 8 | Correcta | 0 | 0 | 0 |
| **Total implants: 171** | | | | | | |

Finally, it should be taken into consideration that the invention has been described mainly with reference to some preferred embodiments, exemplified in the accompanying figures. However, the chosen materials, the dimensions, the shapes and the location of the different elements may vary according to the specific requirements of each implementation. The scope of the invention being limited only by the appended claims.

## Claims

1. A drilling system for performing dental implant surgery, the system configured to be used with a computer-made guide element (3b) having an opening (3c) therein, wherein said opening defines a drilling position and a drilling direction, the system comprising:
• a drilling means (1), which comprises a drilling body with a pointed end (1b) attached to a smooth-walled cylindrical body (1a); and
• one or more expansion means (2) of the perforation, each comprising a guide body with a pointed end (2a) that maintains the position determined by the drilling means (1), and a second body with non-cutting lateral faces and a cylindrical-conical shape (2b) and having a diameter that increases as it moves away from the pointed end, to allow the insertion of an implant (3g) whose shape corresponds to a last expansion means but with a larger diameter,
wherein the second body (2b) of the expansion means (2) comprises a plurality of lateral faces, which in a cross-sectional view have a regular polygon shape (2c) and wherein the smooth-walled cylindrical body (1a) precisely fits the opening (3c) in the guide element.

2. The drilling system according to claim 1, wherein the drilling means and the expansion means are configured to be inserted sequentially, and have a progressively larger diameter.

3. The drilling system according to claim 2, wherein the drilling body with a pointed end (1b) corresponds to the guide body with a pointed end (2a) of a first expansion means, such that the pointed end (2a) of the first expansion means is configured for maintaining the position determined by the drilling means (1).

4. The drilling system according to claims 2-3, wherein the guide body with a pointed end (2a) is configured to maintain the position determined by the drilling means (1), and the second body with a cylindrical-conical body (2b) is configured to expand the perforation, allowing the perforation to correspond to the shape of a guide body with a pointed end of a second expansion means such that the position is maintained.

5. The drilling system according to claims 2-3, wherein the drilling means (1) is configured to be used with the guide element, and the at least one expansion means (2) is configured to maintain the position without requiring the guide element

6. The drilling system according to claim 1, wherein the drilling means and the expansion means are connected to a surgical motor configured to rotate between 400 and 2000 RPM, allowing an easy perforation of the cortex of the bone, through the opening of the guide element.

7. The drilling system according to claim 1, wherein the smooth-walled cylindrical body (1a) of the drilling expansion means has a diameter that is in a range between 1 to 4 mm preferable 2 mm.

8. The drilling system according to claim 1, wherein the regular polygon shape (2c) has between 4 to 8 faces, preferable 6 faces.

9. The drilling system according to claim 1, wherein the drilling body (1b) of the drilling means comprises a sharp pointed pyramid shape with between 3 to 8 lateral faces preferable 4 lateral faces.

10. The drilling system according to claim 1, comprising at least three expansion means, wherein a first expansion means in its widest part has a diameter between 2.4 to 2.8 mm, preferable 2.6 mm; a second expansion means in its widest part has a diameter between 2.9 to 3.5 mm, preferable 3.2 mm and a third expansion means in its widest part has a diameter between 3.6 to 4.1 mm preferable 3.8mm.

11. The drilling system according to claim 1, wherein the one or more expansion means has at the pointed end thereof, a crown shape with rounded corners, each comprising a perforation in a central area thereof configured to allow the passage of a liquid flow.

12. The drilling system according to claim 1, further comprising an implant to be inserted, the implant comprising a body with a conical cylinder shape, with a sharp point at a tip of the implant, and that corresponds to the shape of the expansion means.

## Patentansprüche

1. Bohrsystem zur Durchführung von Zahnimplantatchirurgie, wobei das System konfiguriert ist, um mit einem computergefertigten Führungselement (3b) mit einer Öffnung (3c) darin verwendet zu werden, wobei die Öffnung eine Bohrposition und eine Bohrrichtung definiert, wobei das System aufweist:
- eine Bohreinrichtung (1), die einen Bohrkörper mit einem spitzen Ende (1b) aufweist, der an einem glattwandigen zylindrischen Körper (1a) befestigt ist; und
- eine oder mehrere Expansionseinrichtungen (2) der Perforation, die jeweils einen Führungskörper mit einem spitzen Ende (2a), der die durch die Bohreinrichtung (1) bestimmte Position beibehält, und einen zweiten Körper mit nicht schneidenden lateralen Flächen und einer zylindrisch-konischen Form (2b) aufweisen, der einen Durchmesser aufweist, der mit zunehmender Entfernung von dem spitzen Ende zunimmt, um das Einsetzen eines Implantats (3g) zu ermöglichen, dessen Form einer letzten Expansionseinrichtung entspricht, aber einen größeren Durchmesser aufweist,
wobei der zweite Körper (2b) der Expansionseinrichtung (2) mehrere laterale Flächen aufweist, die in einer Querschnittsansicht eine regelmäßige Polygonform (2c) haben, und wobei der glattwandige zylindrische Körper (1a) genau in die Öffnung (3c) des Führungselements passt.

2. Bohrsystem nach Anspruch 1, wobei die Bohreinrichtung und die Expansionseinrichtung konfiguriert sind, um nacheinander eingesetzt zu werden, und einen zunehmend größeren Durchmesser aufweisen.

3. Bohrsystem nach Anspruch 2, wobei der Bohrkörper mit einem spitzen Ende (1b) dem Führungskörper mit einem spitzen Ende (2a) einer ersten Expansionseinrichtung entspricht, so dass das spitze Ende (2a) der ersten Expansionseinrichtung zum Beibehalten der durch die Bohreinrichtung (1) bestimmten Position konfiguriert ist.

4. Bohrsystem nach einem der Ansprüche 2 bis 3, wobei der Führungskörper mit einem spitzen Ende (2a) konfiguriert ist, um die durch die Bohreinrichtung (1) bestimmte Position beizubehalten, und der zweite Körper mit einem zylindrisch-konischen Körper (2b) konfiguriert ist, um die Perforation zu expandieren, was es ermöglicht, dass die Perforation der Form eines Führungskörpers mit einem spitzen Ende einer zweiten Expansionseinrichtung entspricht, so dass die Position beibehalten wird.

5. Bohrsystem nach einem der Ansprüche 2 bis 3, wobei die Bohreinrichtung (1) konfiguriert ist, um mit dem Führungselement verwendet zu werden, und die mindestens eine Expansionseinrichtung (2) konfiguriert ist, um die Position beizubehalten, ohne dass das Führungselement erforderlich ist.

6. Bohrsystem nach Anspruch 1, wobei die Bohreinrichtung und die Expansionseinrichtung mit einem chirurgischen Motor verbunden sind, der konfiguriert ist, sich zwischen 400 und 2000 U/min zu drehen, was eine einfache Perforation der Kortikalis des Knochens durch die Öffnung des Führungselements ermöglicht.

7. Bohrsystem nach Anspruch 1, wobei der glattwandige zylindrische Körper (1a) der Bohrexpansionseinrichtung einen Durchmesser hat, der in einem Bereich zwischen 1 und 4 mm, vorzugsweise 2 mm, liegt.

8. Bohrsystem nach Anspruch 1, wobei die regelmäßige Polygonform (2c) zwischen 4 und 8 Flächen, vorzugsweise 6 Flächen, aufweist.

9. Bohrsystem nach Anspruch 1, bei dem der Bohrkörper (1b) der Bohreinrichtung eine spitz zulaufende Pyramidenform mit 3 bis 8 lateralen Flächen, vorzugsweise 4 lateralen Flächen, aufweist.

10. Bohrsystem nach Anspruch 1, das mindestens drei Expansionseinrichtungen aufweist, wobei eine erste Expansionseinrichtung in ihrem breitesten Teil einen Durchmesser zwischen 2,4 und 2,8 mm, vorzugsweise 2,6 mm, aufweist; eine zweite Expansionseinrichtung in ihrem breitesten Teil einen Durchmesser zwischen 2,9 und 3,5 mm, vorzugsweise 3,2 mm, aufweist und eine dritte Expansionseinrichtung in ihrem breitesten Teil einen Durchmesser zwischen 3,6 und 4,1 mm, vorzugsweise 3,8 mm, aufweist.

11. Bohrsystem nach Anspruch 1, wobei die eine oder die mehreren Expansionseinrichtungen an ihrem spitzen Ende eine Kronenform mit abgerundeten Ecken haben, die jeweils eine Perforation in einem zentralen Bereich davon aufweisen, die konfiguriert ist, um den Durchgang eines Flüssigkeitsstroms zu ermöglichen.

12. Bohrsystem nach Anspruch 1, das ferner ein einzusetzendes Implantat aufweist, wobei das Implantat einen Körper mit einer konischen Zylinderform aufweist, mit einer scharfen Spitze an einer Spitze des Implantats, und die der Form der Expansionseinrichtung entspricht.

## Revendications

1. Système de forage pour l'exécution d'une chirurgie d'implant dentaire, ledit système étant destiné à être utilisé avec un élément de guidage (3b) fabriqué par ordinateur où est ménagée une ouverture (3c), ladite ouverture définissant une position de forage et une direction de forage, ledit système comprenant :
- un moyen de forage (1), comprenant un corps de forage avec une extrémité pointue (1b) fixé à un corps cylindrique à paroi lisse (1a) ; et
- un ou plusieurs moyens d'élargissement (2) de la perforation, comprenant chacun un corps de guidage ayant une extrémité pointue (2a) maintenant la position déterminée par le moyen de forage (1), et un deuxième corps avec des faces latérales non tranchantes et une forme tronconique (2b), et présentant un diamètre croissant à mesure de son éloignement de l'extrémité pointue, pour permettre l'insertion d'un implant (3g) dont la forme correspond à un dernier moyen d'élargissement, mais de diamètre supérieur,
où le deuxième corps (2b) du moyen d'élargissement (2) présente une pluralité de faces latérales ayant en coupe transversale une forme de polygone régulier (2c), et où le corps cylindrique à paroi lisse (1a) s'ajuste exactement dans l'ouverture (3c) de l'élément de guidage.

2. Système de forage selon la revendication 1, où le moyen de forage et le moyen d'élargissement sont prévus pour être insérés séquentiellement et ont un diamètre croissant graduellement.

3. Système de forage selon la revendication 2, où le corps de forage ayant une extrémité pointue (1b) correspond au corps de guidage avec une extrémité pointue (2a) d'un premier moyen d'élargissement, de sorte que l'extrémité pointue (2a) du premier moyen d'élargissement est prévue pour maintenir la position déterminée par le moyen de forage (1).

4. Système de forage selon les revendications 2 et 3, où le corps de guidage ayant une extrémité pointue (2a) est prévu pour maintenir la position déterminée par le moyen de forage (1), et le deuxième corps ayant un corps tronconique (2b) est prévu pour élargir la perforation, permettant à la perforation de correspondre à la forme d'un corps de guidage avec une extrémité pointue d'un deuxième moyen d'élargissement, de manière à maintenir la position.

5. Système de forage selon les revendications 2 et 3, où le moyen de forage (1) est prévu pour être utilisé avec l'élément de guidage, et où ledit au moins un moyen d'élargissement (2) est prévu pour maintenir la position sans avoir besoin de l'élément de guidage.

6. Système de forage selon la revendication 1, où le moyen de forage et le moyen d'élargissement sont reliés à un moteur chirurgical prévu pour tourner entre 400 et 2000 tours/minute, permettant une perforation facile du cortex de l'os, par l'ouverture de l'élément de guidage.

7. Système de forage selon la revendication 1, où le corps cylindrique à paroi lisse (1a) du moyen d'élargissement de forage a un diamètre compris entre 1 et 4 mm, de préférence égal à 2 mm.

8. Système de forage selon la revendication 1, où la forme de polygone régulier (2c) comprend entre 4 et 8 faces, de préférence 6 faces.

9. Système de forage selon la revendication 1, où le corps de forage (1b) du moyen de forage comprend une forme pyramidale pointue avec entre 3 et 8 faces latérales, de préférence 4 faces latérales.

10. Système de forage selon la revendication 1, comprenant au moins trois moyens d'élargissement, où un premier moyen d'élargissement a dans sa partie la plus large un diamètre compris entre 2,4 et 2,8 mm, de préférence 2,6 mm ; un deuxième moyen d'élargissement a dans sa partie la plus large un diamètre compris entre 2,9 et 3,5 mm, de préférence 3,2 mm, et un troisième moyen d'élargissement a dans sa partie la plus large un diamètre compris entre 3,6 et 4,1 mm, de préférence 3,8 mm.

11. Système de forage selon la revendication 1, où ledit un ou lesdits plusieurs moyens d'élargissement présentent, à leur extrémité pointue, une forme en couronne avec des arêtes arrondies, et comprennent chacun une perforation dans une zone centrale prévue pour permettre le passage d'un flux de liquide.

12. Système de forage selon la revendication 1, comprenant en outre un implant à insérer, ledit implant comprenant un corps de forme tronconique, avec une pointe acérée à l'extrémité de l'implant, et correspondant à la forme du moyen d'élargissement.
